# FASCICULE DE BREVET EUROPEEN

(11) **EP 3 567 410 B1**
(45) Date de publication et mention de la délivrance du brevet: **10.11.2021**
(21) Numéro de dépôt: 19172314.7
(22) Date de dépôt: 02.05.2019
(51) Int. Cl.: G02B 6/42, G02B 6/38

(54) **MODULE OPTOÉLECTRONIQUE POUR LIAISON OPTIQUE, INTÉGRANT UN DISPOSITIF DE MONTAGE AMOVIBLE D'UN ÉLÉMENT DE CONTACT OPTIQUE, PROCÉDÉS DE MONTAGE/DÉMONTAGE SANS OUTIL ASSOCIÉS**
OPTOELEKTRONISCHES MODUL FÜR OPTISCHE VERBINDUNG, DIE EINE ENTFERNBARE MONTAGEVORRICHTUNG FÜR EIN OPTISCHES KONTAKTELEMENT UMFASST, ENTSPRECHENDES WERKZEUGLOSES MONTAGE- UND DEMONTAGEVERFAHREN
OPTOELECTRONIC MODULE FOR OPTICAL LINK, INCLUDING A DEVICE FOR REMOVABLE ASSEMBLY OF AN OPTICAL CONTACT ELEMENT, ASSOCIATED METHODS FOR ASSEMBLY/REMOVAL WITHOUT TOOL

(30) Priorité: 09.05.2018 WO PCT/FR2018/053950
(43) Date de publication de la demande: 13.11.2019
(73) Titulaire: Radiall, 93300 Aubervilliers (FR)
(72) Inventeur: SCHWERZIG, Rémy, 73240 Rochefort (FR); QUENTEL, François, 38150 Ville sous Anjou (FR); VALENCIA, Laurent, 73240 Saint Genix-les-Villages (FR); MOUSSEAUX, Daniel, 38110 Cessieu (FR)
(74) Mandataire: Nony

(56) Documents cités:
- CN-U- 201 689 195
- US-A1- 2008 044 136
- US-A1- 2011 019 998
- US-A1- 2012 269 486

## Description

### Domaine de l'invention

La présente invention concerne un module optoélectronique pour liaison optique, destiné généralement à être brasé sur une carte électronique aussi appelée circuit imprimé d'acronyme anglais PCB pour « *Printed Circuit Board"* et dite carte d'application, et destiné à convertir des signaux électriques en des signaux optiques ou vice-versa.

On désigne par sous ensemble optique ou OSA (« Optical Sub Assembly ») un sous ensemble comprenant au moins un(des) composant(s) optoélectronique(s) et son système de couplage optique vers une ou des fibres optiques.

L'invention concerne aussi bien un module émetteur, destiné à réaliser la conversion d'un signal électrique en un signal optique, qu'un module récepteur destiné à réaliser la conversion d'un signal optique en un signal électrique.

L'invention concerne aussi un dispositif émetteur-récepteur qui combine un module récepteur et un module émetteur qui partagent des circuits électroniques communs, usuellement désigné en anglais sous la dénomination « Transceiver », contraction de «TRANSmitter» (« émetteur ») et de « reCEIVER » (« récepteur »).

L'invention vise en premier lieu à permettre un montage/démontage amovible, sans outil, d'éléments de contacts optique à l'intérieur de modules optoélectronique fixés sur une carte électronique, qui soit simple à mettre en œuvre et qui ne nuise pas à l'encombrement des modules.

L'invention concerne de façon générale les modules optoélectroniques destinés à être mis en œuvre notamment dans le domaine aéronautique, le domaine spatial, le domaine de la défense, celui du transport ou du médical ou encore le domaine des télécommunications, le domaine des communications de données et le domaine de l'industriel.

### Etat de l'art

On connaît des systèmes de liaison optique, qui utilisent des modules optoélectroniques et un lien optique réalisé par une ou plusieurs fibres optiques. Chaque module optoélectronique émetteur ou récepteur est constitué d'une carte électronique support, d'un composant optoélectronique et de son composant électronique de commande, d'une ou plusieurs fibres optiques qui peuvent être concaténées en rubans et d'un dispositif de couplage optique entre le composant optoélectronique et la ou les fibres optiques.

Chaque module est ensuite fixé, par brasage ou par le biais d'un connecteur électrique sur une carte d'application.

Un système de liaison optique fonctionnel ou lien optique comprend ainsi au moins un module émetteur et au moins un récepteur couplé optiquement au module émetteur via un medium optique fibré.

On peut citer les produits commerciaux dénommés D-Lightsys® commercialisés par le déposant RADIALL qui peuvent concerner aussi bien un module récepteur qu'un module émetteur, ou un système « Transceiver » intégrant les deux fonctions émettrices et réceptrices.

Si ces systèmes de liaison optique ont donné et donnent encore entière satisfaction en particulier en termes de performances, notamment pour des signaux à haut débit, ils peuvent encore être améliorés notamment en termes de poids, d'encombrement, et de coûts de réalisation et d'assemblage des modules.

En particulier, il peut également y avoir un intérêt à trouver des solutions d'interface de couplage avec des fibres optiques qui soient faciles à assembler et aisément démontables sans outil.

Il existe sur le marché des solutions de modules optoélectroniques pour éléments de contact optique comme par exemple des connecteurs LC ou ELIO®. Ces éléments de contact optique possèdent leur propre système de verrouillage, par clipsage ou à baïonnette. Cependant, les systèmes de verrouillage induisent un fort encombrement.

Et les besoins liés à certaines applications embarquées ou non, impliquent que l'encombrement maximal qu'un module optoélectronique, que ce soit l'émetteur ou le récepteur, peut occuper sur chaque carte d'application soit très réduit.

Par ailleurs, également des éléments de contact optique, tels que ceux commercialisés par la société RADIALL sous la dénomination de gamme LuxCis®, ont déjà fait largement leurs preuves pour des interconnexions optiques entre fibres optiques par couplage avec contact physique (PC), et ce même dans des environnements à exigences sévères.

De plus, ce type de contacts optiques ne possède pas son propre élément de verrouillage. Ces contacts sont généralement retenus dans les inserts de connecteurs multi-contacts par des harpons (« clip » en anglais) insérés dans ces inserts et qui viennent coopérer avec une gorge du contact optique, ce qui nécessite pour leur démontage l'utilisation d'un outil d'extraction adapté pas toujours facile à manipuler.

En plus de la contrainte d'une interface de couplage avec des fibres optiques qui soient simple et aisément démontable, et de la contrainte d'emprise surfacique moindre, il existe d'autres besoins à prendre en compte :
- assurer une conversion électro-optique (émetteur) et optoélectronique (récepteur) de signaux numériques ou analogiques dans une bande de 0 à plusieurs dizaines de gigabits par seconde (Gbps) ou Gigahertz,
- permettre de faire transiter le signal optique d'une carte électronique à un équipement électronique ou à une autre carte électronique,
- définir une liaison robuste, c'est-à-dire compatible avec des environnements fortement contraints, tels que l'aérospatial, l'aéronautique, le médical, les télécoms et celui de la défense, et notamment être capables de fonctionner à des températures de -40°C à +85°C, et/ou de résister à des chocs et vibrations selon les normes aéronautiques en vigueur, et/ou des taux d'humidité importants,
- avoir une très faible consommation électrique, typiquement inférieure à 100 mW par voie optique.

La demande de brevet US2012/0269486A1 divulgue un module optoélectronique comprenant un boitier en deux parties assemblées l'une à l'autre par vissage, dans lequel est fixé un circuit imprimé et à l'avant duquel sont fixés un TOSA et un ROSA avec manchon de maintien de contact optique.

Les demandes de brevet US2011/0019998 et US2008/0044136 chacun des solutions de connexion avec verrouillage de contacts optiques, dans lesquelles les contacts optiques seuls ou en duplex sont munis de leur propre système de verrouillage.

CN201689195A divulgue un transceiver de type SFP avec un boitier en deux parties qui loge un PCB et à l'avant un support de maintien d'un manchon de type OSA.

Il existe donc un besoin pour améliorer les liaisons optiques à modules optoélectroniques, en vue de permettre un montage/démontage amovible sans outil d'éléments de contact optique dans les modules optoélectroniques, qui soit aisé et qui ne nuise pas à l'encombrement.

Le but de l'invention est de répondre au moins en partie à ce besoin.

### Exposé de l'invention

Pour ce faire, l'invention a pour objet, un module optoélectronique, destiné à assurer une conversion d'un signal électrique depuis une carte électronique principale en un signal optique ou vice-versa, comprenant :
- un boitier à l'intérieur duquel sont logés de manière fixe :
   - la carte électronique principale ;
   - au moins un sous-ensemble optique, OSA,
   comprenant :
   - au moins un composant optoélectronique, adapté pour émettre ou recevoir un signal lumineux par sa surface supérieure selon un axe optique (X),
   - au moins un manchon de maintien adapté pour maintenir avec centrage en son sein une férule optique complémentaire intégrée dans un élément de contact optique s'étendant autour de son axe central (X1), avec l'axe central (X1) confondu avec l'axe optique (X) et ;
   - une première butée mécanique fixant la position longitudinale de la férule optique complémentaire une fois connectée à l'intérieur du manchon de maintien;
- au moins une lame comprenant une ouverture débouchante, la lame étant fixée de manière flexible sur la carte électronique principale et/ou le boitier du module entre une position fléchie de déverrouillage dans laquelle l'ouverture débouchante laisse passer à la fois la férule optique complémentaire et au moins une partie du corps de l'élément de contact optique, dans lequel la férule optique complémentaire est logée, de sorte que la férule optique complémentaire puisse être poussée et guidée à l'intérieur du manchon de maintien selon l'axe optique (X), et, une position non fléchie de verrouillage dans laquelle la lame forme une deuxième butée mécanique et ainsi verrouille le corps de l'élément de contact optique à l'intérieur du boitier avec la férule optique complémentaire connectée à l'intérieur du manchon de maintien.

De préférence, dans la position de verrouillage, les férules sont couplées optiquement par contact physique entre leurs faces

On précise que dans le cadre de l'invention, la carte électronique principale du module optoélectronique est un circuit imprimé ou un empilement de feuilles de matériaux diélectriques, tels que le verre époxy, dans lequel un circuit électrique est réalisé.

La carte électronique du module est nécessairement indépendante de la carte électronique d'application ou d'utilisation finale sur laquelle le module selon l'invention est destiné à être fixé. La fixation d'un module optoélectronique selon l'invention sur une carte d'application peut être réalisée par les interconnexions électriques de cette dernière.

Par « composant optoélectronique », on entend ici et dans le cadre de l'invention, des composants nus ou puces, c'est-à-dire qui ne sont pas enveloppés d'un emballage ou autrement dit encapsulés dans un enrobage isolant électrique, aussi appelé couramment « packaging » en anglais.

Par « composants électroniques de commande », on entend ici des composants de pilotages qui peuvent également être sous la forme de composants nus. Mais ils peuvent aussi être encapsulés et déportés dans le module.

Le sous-ensemble optique peut être un sous-ensemble émetteur, le composant optoélectronique étant un laser. Ce peut être entre autres une diode laser à cavité verticale émettant par la surface, de type VCSEL Le sous-ensemble optique peut être un sous-ensemble récepteur, le composant optoélectronique étant une photodiode.

Le module optoélectronique selon l'invention peut constituer un module émetteur (ME), et comprendre un ou plusieurs sous-ensembles émetteurs. Il peut aussi constituer un module optoélectronique récepteur comprenant un ou plusieurs sous-ensembles récepteurs. Un module selon l'invention peut être mixte et combiner les deux fonctions émettrice et réceptrice. Le module optoélectronique peut être monovoie ou multivoies.

L'invention consiste essentiellement à intégrer au sein d'un module optoélectronique, un dispositif de montage amovible d'un élément de contact optique constitué par une lame flexible dont la flexibilité permet de la faire passer d'une position de déverrouillage dans laquelle elle autorise le passage du corps et de la férule optique de l'élément, à une position de verrouillage de ce dernier dans le boitier du module, une fois le couplage optique avec la férule optique du module obtenu. Et un simple appui, même manuel, permet de la faire passer d'une position de verrouillage à une position de déverrouillage qui autorise le retrait de l'élément optique hors du boitier du module.

Grâce à l'invention, on s'affranchit complètement de l'utilisation d'outil pour montage/démontage d'éléments de contact optique.

En outre, la lame flexible étant directement intégrée avec le design du boitier, ce qui permet d'avoir un verrouillage au plus près de l'arrière du corps de l'élément de contact optique et donc de définir une solution de montage/démontage qui ne nuit pas à la compacité du module.

Par ailleurs, la lame flexible peut servir de capot de blindage électromagnétique en formant avec le boitier une cavité fermée.

Selon un mode de réalisation avantageux, la lame comprend au moins une languette servant d'appui d'un doigt d'un opérateur ou d'un outil adapté pour faire fléchir la lame et ainsi l'amener de sa position de verrouillage à sa position de déverrouillage, la flexibilité de la lame ramenant celle-ci dans sa position de verrouillage, en l'absence d'appui sur la languette.

Selon une variante avantageuse, le corps du boitier comprend des premiers rails de guidage adaptés pour guider par coulissement la partie de la lame comprenant l'ouverture débouchante le long du boitier entre sa position de verrouillage et sa position de déverrouillage.

Selon une autre variante avantageuse, l'ouverture débouchante de la lame comprend un décrochement pour coopérer avec une saillie de détrompage du corps de l'élément de contact optique, afin de constituer un système de détrompage de ce dernier lors de son introduction avec la férule complémentaire à l'intérieur du boitier.

Selon cette variante, le corps du boitier comprend avantageusement des deuxièmes rails de guidage adaptés pour guider par coulissement la saillie de détrompage lors de la poussée de la férule complémentaire de sorte à la guider lors de son introduction dans le manchon de maintien.

De préférence, la lame flexible est une lame métallique, de préférence encore en alliage de cuivre au béryllium (CuBe2).

La lame flexible peut être fixée par brasure directement sur les bords du boitier.

Avantageusement, le boitier supporte une vis, traversant à la fois le boitier, la carte électronique principale et la lame flexible, la vis étant destinée à fixer le module sur une carte électronique d'un équipement électronique d'application.

Selon un mode de réalisation, le sous-ensemble optique comprend une carte électronique d'interface, destinée à servir d'interface avec la carte électronique principale, la carte électronique d'interface étant un circuit imprimé plié, de sorte à réaliser un renvoi d'angle des connexions électriques avec la carte électronique principale.

L'invention a également pour objet un ensemble optoélectronique comprenant :
- au moins un module tel que décrit précédemment,
- un élément de contact optique comprenant un ressort de rappel, notamment un ressort hélicoïdal, pour ramener en butée le corps de l'élément de contact optique contre la lame flexible, et contre la butée mécanique qui définit la position de couplage optique vis à vis de l'OSA, une fois l'élément de contact optique verrouillé à l'intérieur du boitier.

L'invention a enfin pour objet un procédé de montage amovible sans outil d'un élément contact optique dans un module d'un module optoélectronique qui vient d'être décrit, comprenant les étapes suivantes :
a/ introduction et guidage manuels de la férule complémentaire intégrée dans l'élément de contact optique, à travers une ouverture traversante de la lame flexible ;
b/ poussée manuelle de l'élément de contact optique jusqu'à ce que la férule complémentaire guidée à l'intérieur du manchon de maintien atteigne sa position de couplage optique avec l'OSA ;
c/ relâchement de l'élément de contact optique, de sorte à provoquer son verrouillage à l'intérieur du boitier par la lame flexible en position de verrouillage.

Selon un mode de réalisation avantageux, le procédé peut comprendre avant l'étape b/, une étape a1/ d'appui manuel sur une partie de la lame flexible de sorte à l'amener de sa position de verrouillage à sa position de déverrouillage.

Selon ce mode, le procédé peut comprendre après l'étape b/, une étape bl/ de relâchement de l'appui manuel sur la partie de lame flexible.

De préférence, l'étape c/ étant réalisée avec mise en butée du corps de l'élément de contact optique par un ressort de rappel soit intégré dans l'élément de contact optique soit logé dans le boitier.

Selon une variante avantageuse, le procédé peut comprendre avant l'étape b/, une étape a2/ de rotation sur lui-même de l'élément de contact optique de sorte à orienter une saillie de détrompage du corps de l'élément de contact optique en regard du décrochement de l'ouverture débouchante de la lame, afin de constituer un système de détrompage et de guidage par coulissement du corps dans des deuxièmes rails de guidage lors de son introduction avec la férule complémentaire à l'intérieur du boitier.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue schématique en perspective d'un exemple de réalisation d'un module optoélectronique selon l'invention intégrant deux sous-ensembles optiques OSA ;
- la figure 2 est une vue en perspective de dessous du module optoélectronique selon la figure 1 ;
- la figure 3 est une vue en perspective d'une lame flexible constituant le dispositif de fixation amovible sans outil des éléments de contact optique au sein du boitier du module selon les figures 1 à 2 ;
- les figures 4A et 4B sont des vues de côté de la lame flexible telle qu'elle est montée sur le boitier du module selon les figures 1 à 2, respectivement dans sa position de verrouillage des éléments de contact optique dans laquelle elle n'est pas fléchie et dans sa position de déverrouillage dans laquelle elle est fléchie par appui, potentiellement manuel;
- les figures 5A à 5D montrent schématiquement en perspective les étapes de montage amovible d'un élément de contact optique au sein d'un module optoélectronique selon l'invention ;
- la figure 6 est une vue de détail en perspective par l'arrière de l'élément de contact optique montrant les moyens de guidage et de verrouillage d'un élément de contact optique au sein d'un module optoélectronique selon l'invention.

Dans l'ensemble de la demande, les termes « vertical », « inférieur », « supérieur », « bas », « haut », « dessous », « dessus » sont à comprendre par référence par rapport à un module optoélectronique selon l'invention avec la carte électronique principale 10 en configuration installée, c'est-à-dire fixée sur une carte électronique d'application, à l'horizontal et les composants actifs notamment du module au-dessus de la carte.

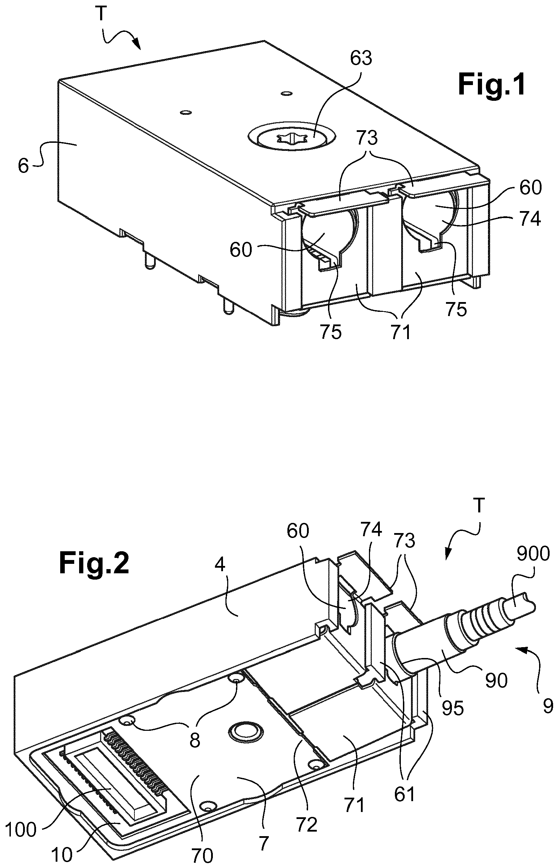

On a représenté en figures 1 à 2 un module optoélectronique T selon l'invention intégrant deux sous-ensembles optiques 2 appelés OSA.

Le module T comprend une carte électronique principale 10 sur laquelle sont fixés les deux sous-ensembles 2 par l'intermédiaire de leurs cartes électroniques support respectives 1.

La carte 10 va servir d'interface avec une carte électronique d'application ou un équipement électronique. Pour ce faire, la carte principale 10 comprend des pistes d'interconnexion 100 qui font saillie sous la carte 10.

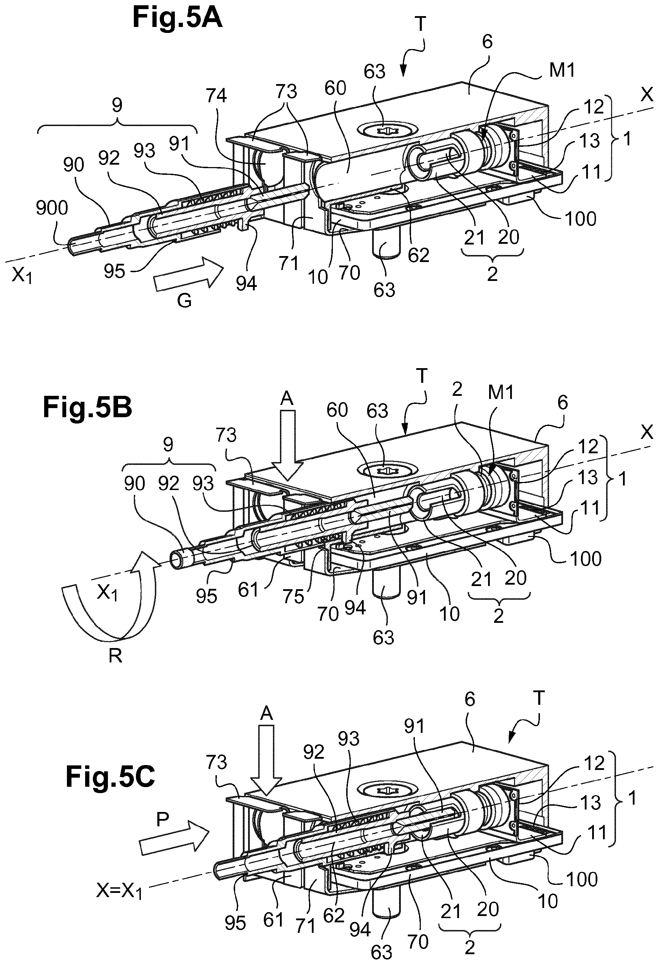

Comme illustré dans les figures 5A à 5D, plus précisément, chaque sous-ensemble optique M₁, M₂ comprend une carte électronique support 1 qui est pliée, à angle droit dans l'exemple illustré, fixée et reliée électriquement à la carte électronique commune 10.

En lieu et place d'un circuit imprimé 10 (PCB pour « Printed Circuit Board »), on peut aussi avoir une carte électronique dont le substrat est constitué d'un empilement de couches ou feuilles de matériaux diélectriques, tels que l'alumine et au sein duquel un circuit de conducteurs électriques est agencé.

Ainsi, une partie 11 de chaque carte support 1 est en appui plan-plan contre le substrat de la carte électronique commune 10 tandis que l'autre partie 12, qui est coudée, est inclinée, à angle droit dans l'exemple illustré, par rapport au substrat de la carte 10.

A l'extrémité de la partie non coudée 11 émergent les pistes conductrices 13 pour réaliser la connexion électrique avec celles de la carte principale commune 10.

Chaque sous-ensemble optique 2 comprend également un manchon de maintien 20, qui peut être supporté par une cage de maintien 21, et dont les axes géométriques (X') sont alignés avec l'axe optique (X) du sous-ensemble optique.

Avec cet agencement, l'axe optique X de chaque sous-ensemble optique 2 est parallèle au substrat de la carte commune 10. Cet agencement est avantageux car l'ensemble des composants des modules s'étend selon l'axe X parallèle au substrat de la carte commune et donc l'encombrement en hauteur est fortement réduit.

Le module T comprend également un boitier métallique 6 qui loge l'ensemble des composants qui viennent d'être décrits.

Plus précisément, le boitier 6, de forme générale parallélépipédique forme une enveloppe fermée tout d'autour de la carte électronique principale 10 et des sous-ensembles optiques 2 à l'exception du dessous de la carte 1 et d'un bord latéral, qui sont quant à eux fermés quasiment complètement par une lame flexible 7 conforme à l'invention.

De préférence, cette lame flexible 7 est métallique, typiquement en alliage de cuivre béryllium CuBe2.

Ainsi, une fois les éléments de contact optique connectés et verrouillés par la lame 7 à l'intérieur du boitier 6, ce dernier 6 et la lame 7 constituent un blindage électromagnétique à la fois autour de tous les composants actifs au sein du boitier 6 et autour des pistes d'interconnexion électrique 13.

Le boitier 6 comprend en son sein deux logements de guidage 60 de forme sensiblement cylindrique qui s'étendent chacun en regard d'un sous-ensemble optique 2 de module optoélectronique. Plus précisément, les logements de guidage 60 sont chacun alignés selon l'axe optique X avec une de leurs extrémités qui débouche sur l'extérieur tandis que l'autre débouche à proximité et en regard du manchon de maintien 20 du sous-ensemble optique 2.

Le boitier 6 comprend également à l'interface avec l'extérieur des paires de rails de guidage 61, chacune en regard d'un logement de guidage 60.

Chaque logement de guidage 60 est fendu dans sa partie inférieure de sorte à réaliser un rail de guidage 62.

Le boitier 6 supporte une vis 63 qui traverse l'intérieur du boitier et la carte électronique principale 10 pour fixer le module optoélectronique T à une carte électronique d'un équipement d'application non représenté.

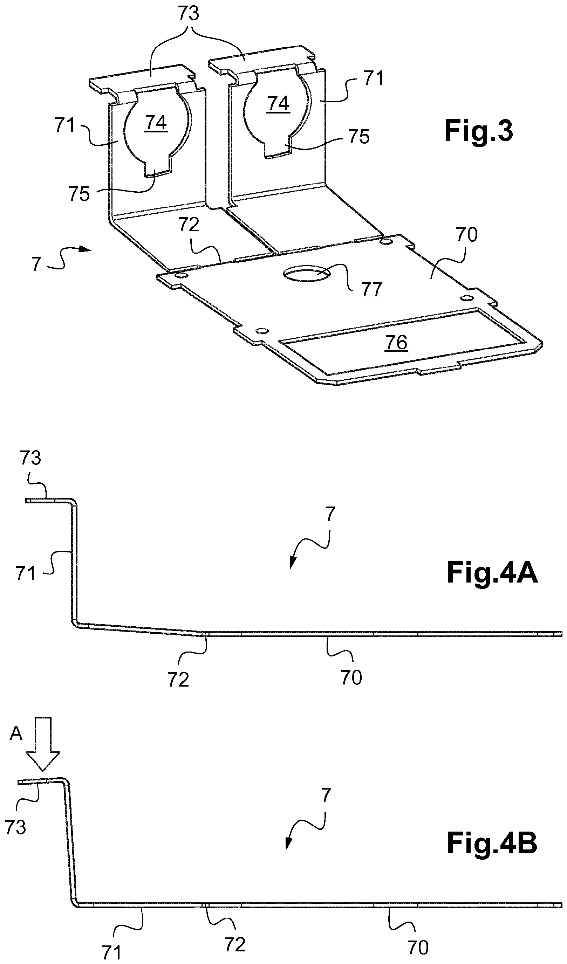

La lame flexible 7 est détaillée aux figures 3, 4A et 4B : elle comprend tout d'abord une partie d'attache 70 et deux parties flexibles 71 qui sont articulées chacune à la partie d'attache 70 autour d'une ligne de flexion 72. Sans contrainte mécanique appliquée, cette lame a une forme légèrement courbe.

Chaque partie flexible 71 est munie d'une partie d'appui potentiellement manuel 73 pliée sensiblement à 90° de la partie flexible 71. Comme symbolisé par la flèche A en figure 5B, lorsque la lame 7 est fixée au boitier 6, un simple appui manuel avec pression sur la partie d'appui 73 vient faire fléchir la partie 71 autour de la ligne de flexion 72. Cet appui peut aussi être appliqué via un outil adapté. Cet appui n'est pas forcément nécessaire selon la forme avant de l'élément du contact optique.

La partie d'attache 70 est également percée :
- d'une ouverture traversante 74 de forme générale circulaire avec un décrochement de détrompage 75 ;
- d'une ouverture traversante 76 de dimensions complémentaires à celles des pistes d'interconnexion électrique de la carte 10 qui la traversent ;
- d'une ouverture traversante 77 de dimensions complémentaires à la vis 63 qui la traverse.

Dans la configuration d'utilisation, la lame flexible 7 est donc brasée par sa partie d'attache 70 à des retours du boitier 6, aux points 8.

L'interconnexion électrique de la carte d'application avec le module se fait par l'intermédiaire d'un connecteur électrique 100 positionné dans l'ouverture 76, et l'ouverture 77 est traversée par la vis 63.

Chaque partie flexible 71 est maintenue dans le boitier 6 par l'intermédiaire des rails de guidage 61 qui permettent donc un coulissement de la partie flexible 71 lorsque celle-ci va être fléchie par appui potentiellement manuel sur la partie 73.

Chaque lame flexible 7 telle que décrite constitue un dispositif de montage amovible d'un élément de contact optique 9.

Chaque élément de contact optique 9 comporte un corps 90 qui porte une fibre optique 900. Une férule 91 est centrée et maintenue dans le corps 90 selon un montage avec flottement axial.

Plus précisément, un manchon de maintien 92 qui maintient avec centrage en son sein la férule optique 91, est monté avec flottement axial par l'intermédiaire d'un ressort hélicoïdal 93 enroulé autour du manchon 92 à l'intérieur du corps 90.

Le manchon de maintien 92 comprend une saillie de détrompage 94.

Le corps 90 de l'élément de contact optique 9 comprend un épaulement 75.

Chaque élément de contact optique 9 peut être du type de ceux déjà utilisés dans les connecteurs de la gamme LuxCis®, commercialisés par la société RADIALL. Mais tout élément de contact sans système de verrouillage propre peut être utilisé.

On décrit maintenant en référence aux figures 5A à 5D les différentes étapes de montage amovible sans outil d'un élément de contact optique 9 dans un module optoélectronique T selon l'invention.

Etape a/ : on introduit et on réalise le guidage manuel de la férule 91 intégrée dans l'élément de contact optique 9, à travers une ouverture traversante 74 de la lame flexible 7 (figure 5A, guidage selon la flèche G).

Etape a1/: on appuie sur la partie 73 de la lame flexible 7, de sorte à la faire fléchir et ainsi l'amener de sa position de verrouillage à sa position de déverrouillage (figure 7B, appui selon la flèche A). La partie en flexion 71 de la lame 7 est guidée le long du boitier 6 par ses rails de guidage 61.

Etape a2/ : simultanément ou avant l'étape al/, si nécessaire, on effectue une rotation sur lui-même de l'élément de contact optique 9, de sorte à orienter sa saillie de détrompage 94 en regard du décrochement 95 de l'ouverture débouchante 74 de la lame 7 (figure 5B, rotation selon la flèche R).

Etape b/ : on exerce alors une poussée manuelle de l'élément de contact optique 9 jusqu'à ce que sa férule 91 guidée à l'intérieur du manchon de maintien 20 atteigne sa position de couplage optique par contact physique (PC) avec la férule 31 du module (figure 5C, poussée selon flèche P).

Pendant la poussée exercée sur l'élément de contact optique 9 sur toute sa course, l'appui est maintenu afin de maintenir la lame flexible 7 dans sa position fléchie de déverrouillage. Le guidage de l'élément optique 9 dans le boitier 6 est assuré tout le long de sa course par la saillie de détrompage 94 qui est guidée avec coulissement dans le rail de guidage 62 du logement 60.

Etape b1/ : une fois le couplage optique entre férules 31, 91 atteint, on relâche l'appui manuel sur la partie 73. La lame 7 revient alors dans sa position non fléchie de verrouillage.

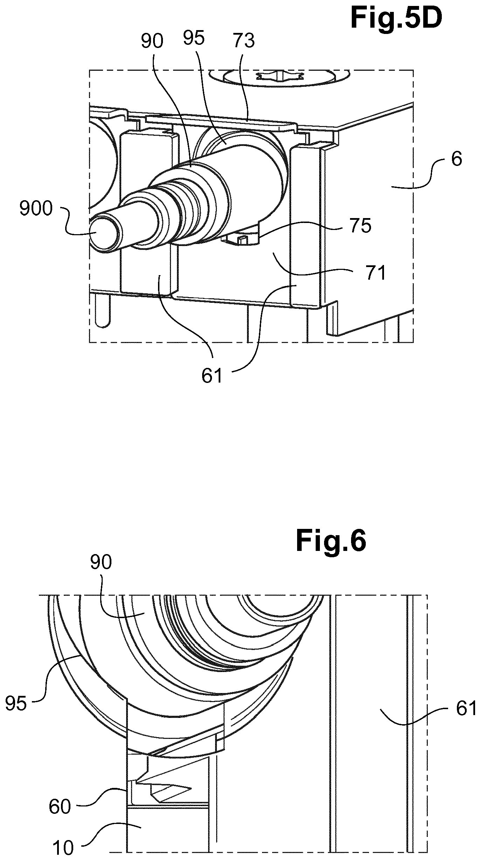

Etape c/ : simultanément ou après l'étape bl/, on relâche alors l'élément de contact optique 9. Le ressort de rappel 93 vient alors mettre en butée l'épaulement 95 du corps 90 de l'élément de contact optique contre la partie 71 de la lame 7 (figure 5D).

Le ressort vient également mettre en pression l'autre extrémité de l'élément de contact optique 9 et sa férule optique 91 contre une butée mécanique. Cette butée mécanique peut être constituée soit par la face d'une férule optique fibrée à l'entrée de l'OSA, soit par un relief à l'extrémité de la cage de maintien ou du manchon de maintien. La butée peut être aussi à l'autre extrémité du manchon de maintien avec une côte précise de dépassement de la férule de l'élément de contact optique. D'autres solutions pourraient également être envisagées, la fonction de la butée mécanique étant de fixer précisément la position longitudinale de la férule 91 de l'élément de contact optique 9 une fois connectée dans le boitier et d'optimiser ainsi le couplage optique avec l'OSA.

Ainsi, le couplage optique dans le manchon 20 est garanti et l'élément de contact optique 9 est verrouillé à l'intérieur du boitier 6 par la lame flexible 7 en position de verrouillage (figure 6).

L'expression « comportant un » doit être comprise comme étant synonyme de « comportant au moins un », sauf si le contraire est spécifié.

## Revendications

1. Module optoélectronique (T), destiné à assurer une conversion d'un signal électrique depuis une carte électronique principale (10) en un signal optique ou vice-versa, le module optoélectronique (T) comprenant :
- un boitier (6) à l'intérieur duquel sont logés de manière fixe :
• la carte électronique principale (10) ;
• au moins un sous-ensemble optique (2), OSA, comprenant:
• au moins un composant optoélectronique, adapté pour émettre ou recevoir un signal lumineux par sa surface supérieure selon un axe optique (X),
• au moins un manchon de maintien (20) adapté pour maintenir avec centrage en son sein une férule optique complémentaire (91) intégrée dans un élément de contact optique (9) s'étendant autour de son axe central (X1), avec l'axe central (X1) confondus avec l'axe optique (X); et
• une première butée mécanique fixant la position longitudinale de la férule optique complémentaire (91) une fois connectée à l'intérieur du manchon de maintien (20) ; **caractérisé en ce que** le module optoélectronique (T) comprend également :
- au moins une lame (7) comprenant une ouverture débouchante (74), la lame (7) étant fixée de manière flexible sur la carte électronique principale (10) et/ou le boitier (6) entre une position fléchie de déverrouillage dans laquelle l'ouverture débouchante (74) laisse passer à la fois la férule optique complémentaire (91) et au moins une partie du corps (90) de l'élément de contact optique (9), dans lequel la férule optique complémentaire (91) est logée, de sorte que la férule optique complémentaire (91) puisse être poussée et guidée à l'intérieur du manchon de maintien (20) et, une position non fléchie de verrouillage dans laquelle la lame (7) forme une deuxième butée mécanique et ainsi verrouille le corps (90) de l'élément de contact optique (9) à l'intérieur du boitier (6) avec la férule optique complémentaire (91) à l'intérieur du manchon de maintien (20).

2. Module optoélectronique (T) selon la revendication 1, la lame (7) comprenant au moins une languette (73) servant d'appui d'un doigt d'un opérateur ou d'un outil adapté pour faire fléchir la lame (7) et ainsi l'amener de sa position de verrouillage à sa position de déverrouillage, la flexibilité de la lame (7) ramenant celle-ci dans sa position de verrouillage, en l'absence d'appui sur la languette (73).

3. Module optoélectronique (T) selon la revendication 1 ou 2, le corps (60) du boitier (6) comprenant des premiers rails de guidage (61) adaptés pour guider par coulissement la partie de la lame (7) comprenant l'ouverture débouchante le long du boitier (6) entre sa position de verrouillage et sa position de déverrouillage.

4. Module optoélectronique (T) selon l'une des revendications précédentes, l'ouverture débouchante de la lame (7) comprend un décrochement (75) pour coopérer avec une saillie de détrompage (94) du corps (90) de l'élément de contact optique (9), afin de constituer un système de détrompage de ce dernier lors de son introduction avec la férule optique complémentaire (91) à l'intérieur du boitier (6), de préférence le corps (60) du boitier (6) comprenant en outre des deuxièmes rails de guidage (62) adaptés pour guider par coulissement la saillie de détrompage lors de la poussée de la férule optique complémentaire (91) de sorte à la guider lors de son introduction dans le manchon de maintien (20).

5. Module optoélectronique (T) selon l'une des revendications précédentes, la lame (7) étant une lame métallique, de préférence en alliage de cuivre au béryllium CuBe2.

6. Module optoélectronique (T) selon l'une des revendications précédentes, la lame (7) étant fixée par brasure directement sur les bords du boitier (6).

7. Module optoélectronique (T) selon l'une des revendications précédentes, le boitier (6) supportant une vis (63), traversant à la fois le boitier (6), la carte électronique principale (10) et la lame (7), la vis (63) étant destinée à fixer le module optoélectronique (T) sur une carte électronique d'un équipement électronique d'application.

8. Module optoélectronique (T) selon l'une des revendications précédentes, constituant un module émetteur (M_{E}), le module émetteur comprenant un ou plusieurs sous-ensembles optiques émetteurs.

9. Module optoélectronique (T) selon l'une des revendications 1 à 7, constituant un module récepteur (M_{R}), le module récepteur comprenant un ou plusieurs sous-ensembles optiques récepteurs.

10. Module optoélectronique (T) selon l'une des revendications précédentes, le sous-ensemble optique (2) comprenant une carte électronique d'interface (1), destinée à servir d'interface avec la carte électronique principale (10), la carte électronique d'interface (1) étant un circuit imprimé plié, de sorte à réaliser un renvoi d'angle des connexions électriques avec la carte électronique principale (10).

11. Module optoélectronique selon les revendications 1 à 7, formant un transceiver comprenant un sous-ensemble optique émetteur et un sous ensemble optique récepteur comportant chacun un circuit imprimé,
le circuit imprimé du sous-ensemble optique récepteur et celui du sous-ensemble optique émetteur étant de préférence pliés à angle droit de sorte que les axes optiques desdits sous-ensembles optiques soient parallèle au substrat de la carte électronique principale (10).

12. Ensemble optoélectronique comprenant :
- au moins un module optoélectronique (T) selon l'une des revendications précédentes,
- un élément de contact optique (9) comprenant un ressort de rappel (93), notamment un ressort hélicoïdal, pour ramener en butée le corps (90) de l'élément de contact optique (9) contre la lame (7), et contre la première butée mécanique qui définit la position de couplage optique vis à vis de l'OSA, une fois l'élément de contact optique (9) verrouillé à l'intérieur du boitier (6).

13. Procédé de montage amovible sans outil d'un élément de contact optique (9) dans un boitier (6) d'un module optoélectronique (T) selon l'une des revendications 1 à 11, caractérisé en qu'il comprend les étapes suivantes :
a/ introduction et guidage manuels de la férule optique complémentaire (91) intégrée dans l'élément de contact optique (9), à travers l'ouverture débouchante (74) traversante de la lame (7);
b/ poussée manuelle de l'élément de contact optique (9) jusqu'à ce que la férule optique complémentaire (91) guidée à l'intérieur du manchon de maintien (20) atteigne sa position de couplage optique avec l'OSA ;
c/ relâchement de l'élément de contact optique (9), de sorte à provoquer son verrouillage à l'intérieur du boitier par la lame (7) en position de verrouillage,
de préférence avant l'étape b/, une étape a1/ d'appui manuel sur une partie de la lame (7) de sorte à l'amener de sa position de verrouillage à sa position de déverrouillage.
, de préférence après l'étape b/, une étape b1/ de relâchement de l'appui manuel sur la partie de lame (7).

14. Procédé de montage amovible selon la revendication 13, l'étape c/ étant réalisée avec mise en butée du corps de l'élément de contact optique (9) par un ressort de rappel soit intégré dans l'élément de contact optique (9) soit logé dans le boitier (6).

15. Procédé de montage amovible selon l'une des revendication 13 ou 14, comprenant avant l'étape b/, une étape a2/ de rotation sur lui-même de l'élément de contact optique (9) de sorte à orienter une saillie de détrompage du corps (90) de l'élément de contact optique (9) en regard du décrochement de l'ouverture débouchante de la lame (7), afin de constituer un système de détrompage et de guidage par coulissement du corps (90) dans des deuxièmes rails de guidage lors de son introduction avec la férule optique complémentaire (91) à l'intérieur du boitier.

## Patentansprüche

1. Optoelektronisches Modul (T), dazu bestimmt, eine Umwandlung eines elektrischen Signals von einer Hauptelektronikkarte (10) in ein optisches Signal oder umgekehrt zu gewährleisten, wobei das optoelektronische Modul (T) enthält:
- ein Gehäuse (6), in dessen Innerem ortsfest untergebracht sind:
• die Hauptelektronikkarte (10);
• mindestens eine optische Baugruppe (2), OSA, die enthält:
• mindestens ein optoelektronisches Bauteil, das geeignet ist, über seine Oberfläche gemäß einer optischen Achse (X) ein Lichtsignal zu senden oder zu empfangen,
• mindestens eine Haltemuffe (20), die geeignet ist, in ihrem Inneren eine komplementäre optische Hülse (91) mit Zentrierung zu halten, die in ein optisches Kontaktelement (9) eingebaut ist, das sich um ihre Mittelachse (X1) erstreckt, wobei die Mittelachse (X1) mit der optischen Achse (X) zusammenfällt; und
• einen ersten mechanischen Anschlag, der die Längsstellung der komplementären optischen Hülse (91) festlegt, wenn sie innerhalb der Haltemuffe (20) verbunden ist;
**dadurch gekennzeichnet, dass** das optoelektronische Modul (T) ebenfalls enthält:
- mindestens eine eine Durchgangsöffnung (74) enthaltende Lamelle (7), wobei die Lamelle (7) an der Hauptelektronikkarte (10) und/oder am Gehäuse (6) zwischen einer umgebogenen Entriegelungsstellung, in der die Durchgangsöffnung (74) sowohl die komplementäre optische Hülse (91) als auch mindestens einen Teil des Körpers (90) des optischen Kontaktelements (9) durchlässt, in dem die komplementäre optische Hülse (91) untergebracht ist, so dass die komplementäre optische Hülse (91) im Inneren der Haltemuffe (20) geschoben und geführt werden kann, und einer nicht umgebogenen Verriegelungsstellung biegsam befestigt ist, in der die Lamelle (7) einen zweiten mechanischen Anschlag bildet und so den Körper (90) des optischen Kontaktelements (9) im Inneren des Gehäuses (6) mit der komplementären optischen Hülse (91) im Inneren der Haltemuffe (20) verriegelt.

2. Optoelektronisches Modul (T) nach Anspruch 1, wobei die Lamelle (7) mindestens eine Zunge (73) enthält, die als Auflage für einen Finger eines Bedieners oder ein geeignetes Werkzeug dient, um die Lamelle (7) umzubiegen und sie so von ihrer Verriegelungsstellung in ihre Entriegelungsstellung zu bringen, wobei die Biegsamkeit der Lamelle (7) diese in Abwesenheit eines Drucks auf die Zunge (73) in ihre Verriegelungsstellung zurückbringt.

3. Optoelektronisches Modul (T) nach Anspruch 1 oder 2, wobei der Körper (60) des Gehäuses (6) erste Führungsschienen (61) enthält, die geeignet sind, den die Durchgangsöffnung enthaltenden Teil der Lamelle (7) entlang des Gehäuses (6) zwischen ihrer Verriegelungsstellung und ihrer Entriegelungsstellung durch Gleiten zu führen.

4. Optoelektronisches Modul (T) nach einem der vorhergehenden Ansprüche, wobei die Durchgangsöffnung der Lamelle (7) eine Ausbuchtung (75) enthält, um mit einem Unverwechselbarkeitsvorsprung (94) des Körpers (90) des optischen Kontaktelements (9) zusammenzuwirken, um ein Unverwechselbarkeitssystem dieses letzteren bei seiner Einführung mit der komplementären optischen Hülse (91) ins Innere des Gehäuses (6) zu bilden, wobei der Körper (60) des Gehäuses (6) vorzugsweise außerdem zweite Führungsschienen (62) enthält, die geeignet sind, den Unverwechselbarkeitsvorsprung beim Schieben der komplementären optischen Hülse (91) durch Gleiten zu führen, um ihn bei seiner Einführung in die Haltemuffe (20) zu führen.

5. Optoelektronisches Modul (T) nach einem der vorhergehenden Ansprüche, wobei die Lamelle (7) eine metallische Lamelle ist, vorzugsweise aus einer Kupfer-Beryllium-Legierung CuBe2.

6. Optoelektronisches Modul (T) nach einem der vorhergehenden Ansprüche, wobei die Lamelle (7) durch Löten direkt auf den Rändern des Gehäuses (6) befestigt wird.

7. Optoelektronisches Modul (T) nach einem der vorhergehenden Ansprüche, wobei das Gehäuse (6) eine Schraube (63) trägt, die sowohl das Gehäuse (6), die Hauptelektronikkarte (10) als auch die Lamelle (7) durchquert, wobei die Schraube (63) dazu bestimmt ist, das optoelektronische Modul (T) auf einer Elektronikkarte einer elektronischen Anwendungsausrüstung zu befestigen.

8. Optoelektronisches Modul (T) nach einem der vorhergehenden Ansprüche, das ein Sendemodul (M_{E}) bildet, wobei das Sendemodul eine oder mehrere optische Sendebaugruppen enthält.

9. Optoelektronisches Modul (T) nach einem der Ansprüche 1 bis 7, das ein Empfangsmodul (M_{R}) bildet, wobei das Empfangsmodul eine oder mehrere optische Empfangsbaugruppen enthält.

10. Optoelektronisches Modul (T) nach einem der vorhergehenden Ansprüche, wobei die optische Baugruppe (2) eine Schnittstellen-Elektronikkarte (1) enthält, die dazu bestimmt ist, als Schnittstelle mit der Hauptelektronikkarte (10) zu dienen, wobei die Schnittstellen-Elektronikkarte (1) eine umgebogene Leiterplatte ist, um eine Umlenkvorrichtung der elektrischen Verbindungen mit der Hauptelektronikkarte (10) herzustellen.

11. Optoelektronisches Modul nach den Ansprüchen 1 bis 7, das einen Transceiver bildet, der eine optische Sendebaugruppe und eine optische Empfangsbaugruppe enthält, die je eine Leiterplatte aufweisen, wobei die Leiterplatte der optischen Empfangsbaugruppe und diejenige der optische Sendebaugruppe vorzugsweise im rechten Winkel umgebogen sind, so dass die optischen Achsen der optischen Baugruppen parallel zum Substrat der Hauptelektronikkarte (10) sind.

12. Optoelektronische Einheit, die enthält:
- mindestens ein optoelektronisches Modul (T) nach einem der vorhergehenden Ansprüche,
- ein optisches Kontaktelement (9), das eine Rückstellfeder (93) enthält, insbesondere eine Schraubenfeder, um den Körper (90) des optischen Kontaktelements (9) gegen die Lamelle (7) und gegen den ersten mechanischen Anschlag in Anschlag zurückzuführen, der die Stellung optischer Kopplung gegenüber der OSA definiert, sobald das optische Kontaktelement (9) im Inneren des Gehäuses (6) verriegelt ist.

13. Verfahren zur werkzeugfreien lösbaren Montage eines optischen Kontaktelements (9) in ein Gehäuse (6) eines optoelektronischen Moduls (T) nach einem der Ansprüche 1 bis 11, **dadurch gekennzeichnet, dass** es die folgenden Schritte enthält:
a/ manuelle Einführung und Führung der in das optische Kontaktelement (9) eingebauten komplementären optischen Hülse (91) durch die die Lamelle (7) durchquerende Durchgangsöffnung (74);
b/ manuelles Schieben des optischen Kontaktelements (9), bis die im Inneren der Haltemuffe (20) geführte komplementäre optische Hülse (91) ihre Stellung der optischen Kopplung mit der OSA erreicht;
c/ Loslassen des optischen Kontaktelements (9), um seine Verriegelung innerhalb des Gehäuses durch die Lamelle (7) in Verriegelungsstellung zu bewirken,
vorzugsweise vor dem Schritt b/ einen Schritt a1/ des manuellen Drückens auf einen Teil der Lamelle (7), um sie von ihrer Verriegelungsstellung in ihre Entriegelungsstellung zu bringen, vorzugsweise nach dem Schritt b/ einen Schritt bl/ des Lockerns des manuellen Drückens auf den Teil der Lamelle (7) .

14. Verfahren zur lösbaren Montage nach Anspruch 13, wobei der Schritt c/ mit Inanschlagbringen des Körpers des optischen Kontaktelements (9) durch eine Rückstellfeder durchgeführt wird, die entweder in das optische Kontaktelement (9) eingebaut oder im Gehäuse (6) untergebracht ist.

15. Verfahren zur lösbaren Montage nach einem der Ansprüche 13 oder 14, das vor dem Schritt b/ einen Schritt a2/ der Drehung des optischen Kontaktelements (9) um sich selbst enthält, um einen Unverwechselbarkeitsvorsprung des Körpers (90) des optischen Kontaktelements (9) gegenüber der Ausbuchtung der Durchgangsöffnung der Lamelle (7) auszurichten, um ein Unverwechselbarkeits- und Führungssystem durch Gleiten des Körpers (90) in zweiten Führungsschienen bei seiner Einführung mit der komplementären optischen Hülse (91) ins Innere des Gehäuses zu bilden.

## Claims

1. Optoelectronic module (T), intended to ensure a conversion of an electrical signal from a main electronic board (10) into an optical signal or vice-versa, the optoelectronic module (T) comprising:
- a housing (6) inside which are fixedly housed:
• the main electronic board (10);
• at least one optical subassembly (2), OSA, comprising:
• at least one optoelectronic component, adapted to transmit or receive a light signal by its top surface along an optical axis (X),
• at least one holding sleeve (20) adapted to hold, with centring within it, a complementary optical ferule (91) incorporated in an optical contact element (9) extending about its central axis (X1), with the central axis (X1) coinciding with the optical axis (X); and
• a first mechanical abutment fixing the longitudinal position of the complementary optical ferule (91) once connected inside the holding sleeve (20); **characterized in that** the optoelectronic module (T) also comprises:
- at least one blade (7) comprising a clear opening (74), the blade (7) being fixed flexibly to the main electronic board (10) and/or the housing (6) between a bent unlocking position in which the clear opening (74) allows passage both of the complementary optical ferule (91) and at least a part of the body (90) of the optical contact element (9), in which the complementary optical ferule (91) is housed, such that the complementary optical ferule (91) can be pushed and guided in the holding sleeve (20) and a non-bent locking position in which the blade (7) forms a second mechanical abutment and thus locks the body (90) of the optical contact element (9) inside the housing (6) with the complementary optical ferule (91) inside the holding sleeve (20).

2. Optoelectronic module (T) according to Claim 1, the blade (7) comprising at least one tongue (73) serving as bearing surface for a finger of an operator or of a tool adapted to bending the blade (7) and thus bringing it from its locking position to its unlocking position, the flexibility of the blade (7) returning the latter to its locking position, in the absence of pressure on the tongue (73).

3. Optoelectronic module (T) according to Claim 1 or 2, the body (60) of the housing (6) comprising first guiding rails (61) adapted to slidingly guide the part of the blade (7) comprising the clear opening along the housing (6) between its locking position and its unlocking position.

4. Optoelectronic module (T) according to one of the preceding claims, the clear opening of the blade (7) comprising a setback (75) to cooperate with a polarizing protuberance (94) of the body (90) of the optical contact element (9), in order to form a polarizing system for the latter upon its introduction with the complementary optical ferule (91) in the housing (6), preferably the body (60) of the housing (6) also comprising second guiding rails (62) adapted to slidingly guide the polarizing protuberance when the complementary optical ferule (91) is pushed so as to guide it in its introduction into the holding sleeve (20).

5. Optoelectronic module (T) according to one of the preceding claims, the blade (7) being a metal blade, preferably made of copper-beryllium alloy CuBe2.

6. Optoelectronic module (T) according to one of the preceding claims, the blade (7) being fixed by brazing directly to the edges of the housing (6).

7. Optoelectronic module (T) according to one of the preceding claims, the housing (6) supporting a screw (63), passing right through the housing (6), the main electronic board (10) and the blade (7), the screw (63) being intended to fix the optoelectronic module (T) on an electronic board of an applicable electronic unit.

8. Optoelectronic module (T) according to one of the preceding claims, forming a transmitter module (M_{E}), the transmitter module comprising one or more optical transmitter subassemblies.

9. Optoelectronic module (T) according to one of Claims 1 to 7, forming a receiver module (M_{R}), the receiver module comprising one or more optical receiver subassemblies.

10. Optoelectronic module (T) according to one of the preceding claims, the optical subassembly (2) comprising an electronic interface board (1), intended to serve as interface with the main electronic board (10), the electronic interface board (1) being a printed circuit board that is folded so as to produce an angular member of the electrical connections with the main electronic board (10).

11. Optoelectronic module according to Claims 1 to 7, forming a transceiver comprising an optical transmitter subassembly and an optical receiver subassembly each comprising a printed circuit board,
the printed circuit board of the optical receiver subassembly and that of the optical transmitter subassembly being preferably folded at right angles such that the optical axes of said optical subassemblies are parallel to the substrate of the main electronic board (10) .

12. Optoelectronic assembly comprising:
- at least one optoelectronic module (T) according to one of the preceding claims,
- an optical contact element (9) comprising a return spring (93), notably a helical spring, to bring the body (90) of the optical contact element (9) into abutment against the blade (7), and against the first mechanical abutment which defines the optical coupling position with respect to the OSA, once the optical contact element (9) is locked inside the housing (6).

13. Method for removable assembly, without tools, of an optical contact element (9) in a housing (6) of an optoelectronic module (T) according to one of Claims 1 to 11, **characterized in that** it comprises the following steps:
a/ manual introduction and guiding of the complementary optical ferule (91) incorporated in the optical contact element (9), through the through clear opening (74) of the blade (7);
b/ manual pushing of the optical contact element (9) until the complementary optical ferule (91) guided inside the holding sleeve (20) reaches its position of optical coupling with the OSA;
c/ releasing of the optical contact element (9), so as to provoke the locking thereof inside the housing by the blade (7) in locking position,
preferably before the step b/, a step a1/ of manual pressing on a part of the blade (7) so as to bring it from its locking position to its unlocking position, preferably after the step b/, a step b1/ of relaxing of the manual pressure on the part of blade (7).

14. Removable assembly method according to Claim 13, the step c/ being performed with the abutting of the body of the optical contact element (9) by a return spring either incorporated in the optical contact element (9) or housed in the housing (6).

15. Removable assembly method according to one of Claims 13 and 14, comprising, before the step b/, a step a2/ of rotation on itself of the optical contact element (9) so as to orient a polarizing protuberance of the body (90) of the optical contact element (9) in line with the setback of the clear opening of the blade (7), in order to constitute a system for polarizing and slidingly guiding the body (90) in second guiding rails upon its introduction with the complementary optical ferule (91) inside the housing.
